# EUROPÄISCHE PATENTANMELDUNG

(11) **EP 0 837 306 A2**
(43) Veröffentlichungstag der Anmeldung: **22.04.1998**
(21) Anmeldenummer: 97117358.8
(22) Anmeldetag: 08.10.1997
(51) Int. Cl.: G01M 3/22, G01N 15/08

(54) **Verfahren und Vorrichtung zur Alterungsverfolgung von Dichtwerkstoffen**

(30) Priorität: 08.10.1996 DE 19641356
(71) Anmelder: Tüv Bau- und Betriebstechnik GmbH, 70794 Filderstadt (DE)
(72) Erfinder: Thoma, Wolfgang, Dipl.-Ing., 70794 Filderstadt (DE)
(74) Vertreter: Dreiss, Fuhlendorf, Steimle & Becker, Patentanwälte

(57) **Zusammenfassung**

Verfahren zur Alterungsverfolgung von Dichtwerkstoffen, insbesondere zur Abdichtung von Rohrverbindungen im Abwasserkanalbereich, das dadurch gekennzeichnet ist, dass die Konzentration eines bestimmten von einer Seite (7) des Dichtwerkstoffs (10, 72) durch diesen hindurch zu einer Messkammer (6, 68, 96) auf der anderen Seite diffundierten Permeenten kontinuierlich oder in zeitlichen Abständen auf der Messkammerseite ermittelt und dabei ein Zeitintervall (Phase 2) konstanter Permeabilität des Dichtwerkstoffs für den Permeenten festgestellt wird. Hierdurch kann die Alterung des Dichtwerkstoffs verfolgt werden, bevor makroskopisch wahrnehmbare Leckagen auftreten.

## Beschreibung

Die Erfindung betrifft ein Verfahren und eine Vorrichtung zur Alterungsverfolgung von Dichtwerkstoffen, insbesondere zur Abdichtung von Rohrverbindungen im Abwasserkanalbereich oder von Bauwerksfugen.

Es war bislang nicht bekannt, den Vorgang des Alterns von Dichtwerkstoffen und Dichtelementen von Rohrverbindungen gewissermaßen von Anfang an zu untersuchen und messtechnisch zu erfassen. Es wurde bislang lediglich geprüft, ob eine Rohrverbindung oder auch ein ganzes Rohrsystem im Hinblick auf die darin geführten Stoffe noch dicht ist oder diese Stoffe an einer oder mehreren Leckstellen durchlässt. Hierfür wird üblicherweise an ein Rohrsystem oder einen Abschnitt eines Rohrsystems ein Druck angelegt, um festzustellen, ob das Rohrsystem oder der Rohrabschnitt noch dicht oder bereits undicht ist. Eine über diese Erkenntnis hinausgehende Aussage über den Zustand des untersuchten Systems kann bei Anwendung dieser bekannten Prüfmethode nicht gewonnen werden. Überdies besteht die Gefahr, dass durch Anlegen des Prüfdrucks eine Beschädigung des Rohrsystems auftritt, die sich bei lediglich bestimmungsgemäßem drucklosem Betrieb des Rohrsystems gar nicht eingestellt hätte.

Der vorliegenden Erfindung liegt die Aufgabe zugrunde, ein Verfahren sowie eine Vorrichtung zu seiner Durchführung vorzuschlagen, welches Verfahren zerstörungsfrei durchführbar ist und weitere über die bloße Information des Vorliegens einer Leckstelle hinausgehende Informationen über den Zustand eines Dichtwerkstoffs zur Verfügung stellt.

Diese Aufgabe wird gelöst, durch ein Verfahren zur Alterungsverfolgung von Dichtwerkstoffen, insbesondere zur Abdichtung von Rohrverbindungen im Abwasserkanalbereich oder von Bauwerksfugen, bei dessen Durchführung die Konzentration eines bestimmten von einer Seite des Dichtwerkstoffs durch diesen hindurch zu einer Messkammer auf der anderen Seite diffundierten Permeenten kontinuierlich oder in zeitlichen Abständen auf der Messkammerseite ermittelt und dabei ein Zeitintervall konstanter Permeabilität des Dichtwerkstoffs für den Permeenten festgestellt wird.

Das erfindungsgemäße Verfahren beruht auf der Erfassung von Permeationsvorgängen. Es wurde erfindungsgemäß erkannt, dass ein Dichtwerkstoff auch im neuwertigen Zustand eine von Null verschiedene Permeabilität für verschiedene als Permeenten bezeichnete Stoffe aufweist. Die Permeabilität ist jedoch extrem gering; Permeenten werden im mikroskopischen Bild der Permeationsvorgänge nur im Spurenbereich in Form einzelner Moleküle durch einen neuwertigen Dichtwerkstoff hindurchgelassen. Bei der Durchführung des Verfahrens wird also die Konzentration eines bestimmten Permeenten qualitativ oder quantitativ gemessen, welcher von einer Seite eines Dichtwerkstoffs, an den ein Prüfgas, eine Prüfflüssigkeit oder auch ein dem Einsatzbereich des Dichtwerkstoffs entsprechendes Umgebungsmedium angrenzt, durch den Dichtwerkstoff hindurch zur Messkammerseite diffundiert ist. Die Messung findet auf dieser Messkammerseite statt. Es wurde nun erkannt, daß ein Zeitintervall nahezu konstanter Permeabilität des Dichtwerkstoffs ermittelt werden kann, welches einem Neuwertigkeitszustand des untersuchten Dichtwerkstoffs entspricht. Während dieses Neuwertigkeitszustands ist also insbesondere noch keine die Permeabilität beeinflussende Versprödung oder ein Materialabtrag feststellbar, Mikrorisse sowie eine Abnahme der Kompressionskräfte des Dichtwerkstoffs sind ebenfalls (noch) nicht festzustellen, auch sind noch keine Ablösungserscheinungen des Dichtwerkstoffs zum angrenzenden Dichtsitz erkennbar. Mit dem erfindungsgemäßen Verfahren werden also Informationen über einen zu untersuchenden Dichtwerkstoff oder ein Dichtelement lange vor einem makroskopischen Undichtwerden gewonnen. Es besteht also die Möglichkeit, in einem Langzeitversuch durch kontinuierliche Messung oder Messung in zeitlichen Abständen die Dauer dieses Neuwertigkeitszustands zu verfolgen bzw. zu messen. Es können dabei auf der der Messkammer abgewandten Prüfseite Prüfmedien verwendet werden, die denjenigen entsprechen, denen der Dichtwerkstoff im Betrieb bestimmungsgemäß ausgesetzt ist. Es können jedoch auch Störfallbedingungen simuliert werden, beispielweise könnte auf der Prüfseite ein chemisch aggressives Prüfmedium, eine Säure, eine Base oder dergleichen eingesetzt werden, und es könnte dann aufgrund der in Abhängigkeit von der Zeit bestimmten Permeabilität des Dichtwerkstoffs für einen Permeenten Informationen darüber gewonnen werden, wie lange der Dichtwerkstoff bestimmten extremen Störfallbedingungen ausgesetzt werden kann, ohne daß ein makroskopisches Undichtwerden des Dichtwerkstoffs auftritt.

Die Beständigkeit gegenüber Abwassermedien und Chemikalien kann nun im Vergleich zu früher üblichen Untersuchungen mit einer wesentlich höheren Aussagefähigkeit nachgewiesen werden. Die unterschiedlichsten Rohrsysteme können direkt miteinander verglichen werden. Alle maßgeblichen Faktoren auf die Abdichtungsqualität werden mit einer einzigen Messmethode erfasst. Wo Drucktests nur bedingt eine Aussage liefern können, kann z.B. der Einfluss von Temperatur, Kriechen, Quellen, Kompression, Oberflächengüte, Verbundqualität, Materialinhomogenitäten, Alterungsbeständigkeit bei Lagerung im Freien ect. zerstörungsfrei direkt am Verlauf des Permeations-Messsignals abgelesen werden.

Das Zeitintervall konstanter Permeabilität des Dichtwerkstoffs wird über die Messung der Konzentration des Permeenten auf der Messkammerseite gewonnen. Wenn die Messkammer ideal dichtend an dem Dichtwerkstoff anläge, so würde aufgrund der Diffusionsvorgänge durch den Dichtwerkstoff hindurch die Konzentration auf der Messkammerseite (langsam) ansteigen. Aus einem konstanten Anstieg der Konzentration kann man dann auf eine konstante Permeabilität schließen. Wenn die Messkammer - was üblicherweise der Fall sein dürfte - eine von Null verschiedene Durchlässigkeit für den Permeenten aufweist, so kann sich auch ein stationärer Zustand mit im wesentlichen konstanter Konzentration auf der Messkammerseite ausbilden, aus dem ebenfalls auf eine konstante Permeabilität des Dichtwerkstoffs geschlossen werden kann.

Zur Messung der Konzentration des Permeenten auf der Messkammerseite eignet sich beispielsweise die Verwendung der IR-Spektroskopie, Gaschromotographie, Photosionisation oder der Halbleitersensorik.

In Weiterbildung des Verfahrens von besonderer Bedeutung wird ein Zeitpunkt nach Verfahrensbeginn ermittelt, ab dem sich die Konzentration in der Messkammer zu erhöhen beginnt oder die Konzentration in stärkerem Maße ansteigt als im Verlauf des vorstehend angesprochenen Zeitintervalls, was auf einen Anstieg der Permeabilität des Dichtwerkstoffs für den bestimmten Permeenten schließen lässt, ohne dass jedoch zu diesem Zeitpunkt der Dichtwerkstoff im makroskopischen Sinne undicht und der Brauchbarkeitsbereich des Dichtwerkstoffs verlassen wäre. Es wurde also erfindungsgemäß erkannt, dass mit zunehmender Alterung eines Dichtwerkstoffs ein Zeitpunkt erreicht wird, an dem die zuvor konstante Permeabilität des Dichtwerkstoffs für den bestimmten Permeenten zunimmt. Dieser Zeitpunkt wird mit dem Verlassen des Neuwertigkeitszustands des Dichtwerkstoffs gleichgesetzt, d.h. ab diesem Zeitpunkt machen sich erste Alterungserscheinungen messtechnisch bemerkbar und werden bereits zu diesem frühen Zeitpunkt, also lange bevor eine makroskopische Undichtigkeit auftritt, entdeckt und messtechnisch erfasst. Mit dem Ansteigen der Permeabilität ist nun im allgemeinen von einer sich stetig verschlechternden Mikrostruktur des Dichtwerkstoffs auszugehen, d.h. die Alterung und die damit verbundenen Verschlechterungserscheinungen werden stetig, möglicherweise sogar exponentiell zunehmen. Es tritt möglicherweise Versprödung und damit einhergehende Bildung von Mikrorissen sowie eine Abnahme der Kompressionskraft auf, welche das Dichtmaterial zuvor auf einen Dichtsitz ausübte. Bei mechanischer Beanspruchung oder unter dem Einfluss chemisch aggressiver Medien ist darüber hinaus mit einem Materialabtrag zu rechnen. Schlussendlich ist der erfindungsgemäß ermittelte Zeitpunkt (t3) eine Art Alarmsignal, welches einem Hersteller oder einem Verarbeiter von Dichtwerkstoffen oder einem Betreiber auf Dichtheit zu überwachender Anlagen als Signal dafür dient, dass nunmehr der "grüne Bereich" oder der Neuwertigkeitszustand eines bereits im Betrieb als Dichtelement eingesetzten Dichtwerkstoffs oder eines im Labor extremen Bedingungen ausgesetzten Dichtwerkstoffs verlassen ist und mit einer Verschlechterung und damit einem bevorstehenden Verlassen des Brauchbarkeitsbereichs des Dichtwerkstoffs zu rechnen ist.

Es kann auch für einzelne Anwendungen von Interesse sein, wenn ein Zeitpunkt (t2) nach Verfahrensbeginn ermittelt wird, der den Anfang des vorstehend erörterten Zeitintervalls konstanter Permeabilität des Dichtwerkstoffs bezeichnet. Dieser Zeitpunkt (t2) ist ein Maß für die Dauer des Erreichens des stationären Zustands und lässt Rückschlüsse auf die Permeationsgeschwindigkeit zu. Es besteht auch die Möglichkeit, einen sogenannten Durchstoßzeitpunkt (t1) zu erfassen, der beispielsweise ermittelt wird, indem ein den Permeenten enthaltendes Prüfgas drucklos der Prüfseite, etwa dem Inneren eines Rohrs, zu einem Zeitpunkt t = 0 zugeleitet wird und dann kontinuierlich die Konzentration des Permeenten auf der Messkammerseite ermittelt wird. Durch Extrapolation des auf der Messkammerseite gemessenen Konzentrationsverlaufs des Permeenten kann dann der Schnittpunkt der Messkurve mit der Zeitachse, insbesondere graphisch, ermittelt werden, welche den Durchstoßzeitpunkt definiert, d.h. den Zeitpunkt, an dem das erste Molekül des Permeenten die Messkammerseite des Dichtwerkstoffs erreicht.

Das erfindungsgemäße Prüfverfahren kann auch in sinnvoller Kombination mit herkömmlichen Werkstoffprüfungen eingesetzt werden. Wenn zum Beispiel die Messwerte ein Verlassen des Zeitintervalls konstanter Permeabilität und damit ein Überschreiten des Zeitpunkts (t3) anzeigen, so kann dies im Falle der Durchführung des Verfahrens an einem isolierten Materialprobenabschnitt als Anlass dafür angesehen werden, bei einer bestehenden Anlage nach Erreichen des Zeitpunkts (t3) einen bekannten Drucktest oder dergleichen durchzuführen.

Wie bereits angedeutet, kann der Dichtwerkstoff in Form eines Materialprobenabschnitts einer bestimmten geometrischen Abmessung unter einer bestimmten Spannung oder auch unter Einwirkung eines bestimmten Umgebungsmediums untersucht werden.

Die bestimmte geometrische Abmessung des Materialprobenabschnitts kann dann vorteilhafterweise im wesentlichen identisch mit derjenigen eines Dichtelements sein, dessen Alterungsverhalten von Interesse ist. Auf diese Weise werden nicht nur Informationen eines Dichtwerkstoffs ansich, sondern Informationen über ein bestimmtes aus diesem Dichtwerkstoff hergestelltes Dichtelement gewonnen. Die bestimmte Spannung oder Kompression, unter der ein Materialprobenabschnitt während der Durchführung des Verfahrens steht, kann vorteilhafterweise identisch mit derjenigen sein, der ein Dichtelement beim bestimmungsgemäßen Einsatz ausgesetzt ist. Dieser Verfahrensvariante liegt die Erkenntnis zugrunde, dass ein Dichtelement im allseitig einem Mediumangriff ausgesetzten, nicht eingespannten Zustand ein anderes Alterungsverhalten zeigt als ein unter Kompression stehendes und in einer Dichtstelle eingespanntes Dichtelement.

Das zuvor erwähnte bestimmte Umgebungsmedium, welchem ein zu untersuchender Dichtwerkstoff ausgesetzt ist, kann vorteilhafterweise dasjenige sein, welches bei der bestimmungsgemäßen Verwendung eines aus dem Dichtwerkstoff hergestellten Dichtelements, dessen Alterungsverhalten von Interesse ist, an dieses angrenzt.

Den vorstehend beschriebenen erfindungsgemäßen Überlegungen liegt der Gedanke zugrunde, bei der Durchführung des Verfahrens möglichst betriebsähnliche Zustände zu simulieren, damit die anhand von Materialprobenabschnitten gewonnenen Informationen über das Alterungsverhalten den tatsächlichen Alterungsverlauf eines unter bestimmten Bedingungen eingesetzten Dichtelements reflektieren.

Es versteht sich jedoch, daß auch Zustände simuliert werden können, die in gewollter Weise von üblichen Betriebszuständen abweichen, um Störfälle in beliebiger Weise zu simulieren. Es kann sich hierbei zum Beispiel um Verschmutzung der Verbindungsstelle, Scherkraftbeanspruchung, Einleitung von zu heißen Abwässern, Chemikalien etc. handeln. Es besteht dann für einen Hersteller, für einen Verarbeiter oder für einen Betreiber die Möglichkeit, eine Aussage darüber zu machen oder eine Garantie dafür auszusprechen, daß eine bestimmte Dichtung einer Rohrverbindung unter bestimmten Bedingungen einen Neuwertigkeitsbereich von einer bestimmten ermittelten Zeitdauer aufweist. Es eröffnet sich hierdurch die Möglichkeit, Herstellergarantien auszusprechen oder bei der Sanierung bestehender Anlagen den Zeitpunkt einer weiteren Funktionskontrolle festzulegen oder zuzusichern.

Es kann sich auch als vorteilhaft erweisen, das bestimmte Umgebungsmedium wechselweise durch gasförmige bzw. flüssige Beaufschlagung des Materialprobenabschnitts bereitzustellen. Es kann hierdurch ein zunehmender und abnehmender Quellzustand des Materials untersucht werden oder eine Schwellbeanspruchung simuliert werden.

Der Materialprobenabschnitt kann aber auch gleichzeitig an einer Stelle mit Gas und an einer anderen Stelle mit Flüssigkeit beaufschlagt werden. Hierdurch kann bei einer Rohrverbindung ein teilgefüllter Zustand simuliert werden.

In besonders vorteilhafter Ausbildung des Erfindungsgedankens wird das Verfahren an einem bestimmungsgemäß zwischen abzudichtenden Bauteilen vorgesehenen Dichtelement quasi in situ durchgeführt. Es wird also nicht ein Materialprobenabschnitt eines Dichtwerkstoffs untersucht, sondern das Verfahren bzw. die Messung wird an einem kompletten Dichtelement durchgeführt. Hierbei kann es sich beispielsweise um eine Rohrdichtung mit einem zwischen zwei Rohrabschnitten eingeklemmten ringförmigen Dichtelement handeln. Es wird beispielsweise an der Außenseite der Rohrverbindung eine Messkammer ausgebildet, welche über die Fuge zwischen den zwei Rohrabschnitten mit dem Dichtelement in Verbindung steht. Es kann dann kontinuierlich oder in zeitlichen Abständen in das Rohrinnere ein den Permeenten enthaltendes Prüfgas oder eine Prüfflüssigkeit eingeleitet werden, und es kann dann in der vorstehend beschriebenen Weise die Konzentration des Permeenten auf der Messkammerseite bestimmt werden.

Die gegeneinander abzudichtenden Bauteile können Teil einer Versuchsvorrichtung sein, auf der sich eine Vielzahl von verschiedenen Beanspruchungszuständen vorgeben lassen. Das Verfahren kann aber auch an einem bestimmungsgemäß zwischen abzudichtenden Bauteilen vorgesehenen Dichtelement durchgeführt werden, wobei die Bauteile Bestandteil einer in Betrieb befindlichen Anlage sind. Hierfür wird das Verfahren beispielsweise bei einer von vielen Rohrverbindungen eines Kanalabschnitts oder einer sonstigen beliebigen Anlage durchgeführt. Sinnvollerweise befinden sich sämtliche Dichtungs- oder Verbindungsstellen innerhalb der Anlage in gleichem Alterungszustand, d.h. sie wurden entweder alle zur gleichen Zeit in derselben Weise hergestellt oder zur gleichen Zeit saniert. Das erfindungsgemäße Verfahren liefert daher die Möglichkeit, ein Dichtelement nicht nur unter betriebsähnlichen Zuständen, sondern im Realbetrieb zu überwachen und Informationen darüber zu gewinnen, wie lange sich die verwandten Dichtelemente im neuwertigen Zustand befinden, so dass ggf. auf umfangreichere aufwendige Prüfmaßnahmen verzichtet werden kann, weil aus den gewonnenen Informationen kein Bedarf zur Durchführung derartiger Prüfungen abgeleitet werden kann.

Wird eine Anlage, beispielsweise ein Abschnitt eines Abwasserkanalsystems, neu hergestellt oder saniert, so kann es sich als vorteilhaft erweisen, zunächst einen ansich bekannten Drucktest durchzuführen, um sicherzustellen, daß die Anlage sich in einem einwandfreien druckdichten Zustand befindet. Es kann dann eine Langzeitüberwachung der Anlage unter Anwendung des erfindungsgemäßen Verfahrens begonnen und durchgeführt werden. Um die Durchführung des Verfahrens ökonomischer zu gestalten, kann es sich als vorteilhaft erweisen, nicht kontinuierliche sondern diskontinuierliche Messungen der Konzentration vorzunehmen.

Es besteht beispielsweise die Möglichkeit, dass in bestimmten Zeitabschnitten eine Messung vorgenommen wird, indem ein Sensor über eine Gasmesskupplung mit der Messkammer in Verbindung gebracht wird, um eine Konzentrationsmessung durchzuführen, und anschließend wieder von der Messkammer getrennt wird. Solange die Messergebnisse nicht auf einen Anstieg der Permeabilität des Dichtwerkstoffs für den betrachteten Permeenten schließen lassen, braucht die Anlage dann nicht weiteren Prüfungen auf Dichtheit unterzogen zu werden. Dies ist erst dann ratsam und sinnvoll, wenn die Messungen anzeigen, dass der Neuwertigkeitsbereich verlassen ist und der Brauchbarkeitsbereich des Dichtwerkstoffs ebenfalls bald zu verlassen werden droht. Die vorstehend beschriebene, in zeitlichen Abständen erfolgende Erfassung von Messwerten unter Anwendung des erfindungsgemäßen Verfahrens dürfte sich als sehr viel kostengünstiger auswirken als die Durchführung aufwendiger Tests, welche letztenendes lediglich einen Ist-Zustand zeigen, jedoch keine Aussage darüber erlauben, wie lange die Anlage nach Beendigung der Prüfung im makroskopischen Sinne dicht ist. Sofern es um Anlagen geht, bei denen chemisch aggressive oder giftige Stoffe an einem Austreten gehindert werden sollen, müssen aufwendige Prüfungsmaßnahmen dementsprechend häufig durchgeführt werden. Wie bereits vorausgehend erwähnt, kann es sich jedoch durchaus als sinnvoll erweisen, beispielsweise nach Erreichen des Zeitpunkts t3 beginnender oder stärker werdender Konzentrationserhöhung in der Messkammer einen Drucktest durchzuführen, um zu diesem Zeitpunkt sicherzustellen, dass die Anlage einem bestimmten Überdruck zu widerstehen vermag.

Es kann sich auch als vorteilhaft erweisen, im Laufe der Zeit die Messkammer zu spülen und damit von dem Permeenten zu reinigen, um anhand des nachfolgenden Wiederansteigens der Konzentration des Permeenten die Permeationsgeschwindigkeit des Permeenten durch den Materialprobenabschnitt hindurch zu bestimmen. Diese Verfahrensvariante eröffnet die Möglichkeit, die Veränderung der Permeationsgeschwindigkeit im Laufe der Zeit bzw. in Abhängigkeit von der Zeit zu bestimmen.

Sofern sich die Durchführung des Verfahrens an einer im Betrieb befindlichen Dichtung nicht durchführen lässt, wird vorgeschlagen, einen Materialprobenabschnitt, welcher dem tatsächlich verwandten Dichtelement weitestgehend nachgebildet oder gar mit diesem identisch ist, unter denselben Betriebsbedingungen in situ zu untersuchen. Beispielsweise könnte ein Materialprobenabschnitt in einer geeigneten Vorrichtung dem tatsächlich auftretenden Umgebungsmedium, etwa im Gerinne eines Abwasserkanals, ausgesetzt werden. Die eigentliche Messung würde dann zwar nicht an der tatsächlichen Dichtung der Rohrleitung oder des Kanals, wohl aber an einem entsprechenden Dichtmaterialprobenabschnitt unter identischen Bedingungen gemessen werden.

Eine erfindungsgemäße Vorrichtung zur Durchführung des Verfahrens nach einem oder mehreren der vorstehenden Ansprüche umfasst nach einer ersten Variante der Erfindung ein eine Messkammer bildendes Gehäuse, eine Einspanneinrichtung, mittels derer ein Materialprobenabschnitt eines Dichtwerkstoffs so innerhalb des Gehäuses angeordnet werden kann, dass er auf einer Seite die Messkammer begrenzt und auf der anderen Seite mit einem den Permeenten enthaltenden Prüfungsmedium beaufschlagbar ist, und einen Sensor zum Messen der Konzentration des durch den Dichtungsmaterialabschnitt diffundierten Permeenten in der Messkammer.

Wenn also das erfindungsgemäße Verfahren nach einer ersten Variante der Erfindung an einem Materialprobenabschnitt eines Dichtwerkstoffs durchgeführt werden soll, so wird über die Einspanneinrichtung erreicht, daß der Materialprobenabschnitt so an die Messkammer angrenzend gehalten ist wie es dem Abdichtungssystem entspricht und mit seiner von der Messkammer abgewandten Seite mit dem Prüfmedium beaufschlagt werden kann, so dass die Diffusion des Permeenten durch den Materialprobenabschnitt hindurch erfolgen und durch den Sensor qualitativ oder quantitativ festgestellt werden kann.
Nach einer bevorzugten Ausführungsform der Erfindung weist die Einspanneinrichtung vorzugsweise ebene Pressflächen auf, mit welchen der Materialprobenabschnitt betriebsähnliche Zustände simulierend in einem bestimmten vorgebbaren Maße eingespannt bzw. komprimiert werden kann. In ganz besonders vorteilhafter Weiterbildung dieses Erfindungsgedanken sind die Oberflächen der Einspanneinrichtung dem Material eines betriebsechten Dichtsitzes nachgebildet oder bestehen vorzugsweise aus diesem Material. Handelt es sich zum Beispiel bei dem interessierenden Dichtwerkstoff um eine Abwasserkanalrohrdichtung, so wäre es von Vorteil, wenn in Simulation betriebsechter Zustände die Einspanneinrichtung eine aus dem Rohrwandungsmaterial, z.B. aus Steingut, PVC, bestehende Oberfläche aufweisen würde.

Bei einer erfindungsgemäßen Vorrichtung ist vorzugsweise eine Temperaturregeleinrichtung zum Einstellen einer vorgebbaren Temperatur innerhalb des Vorrichtungsgehäuses vorgesehen. Es lassen sich dann auch extreme Temperaturbedingungen simulieren, wie sie extremen Betriebsbedingungen über einen längeren Zeitraum entsprechen oder bei Störfällen auftreten.

Es hat sich desweiteren als vorteilhaft erwiesen, wenn die Konzentration des Permeenten nicht unmittelbar im Bereich der eigentlichen Messkammer ermittelt wird, sondern wenn eine in die Messkammer mündende Zuführleitung und eine von der Messkammer wegführende Abführleitung vorgesehen ist, um ein den Permeenten enthaltendes strömbares Sammelmedium an einer Sensoreinrichtung vorbei- und wieder der Messkammer zuzuführen. Bei dieser Vorrichtung eröffnet sich auch die Möglichkeit, eine Gassammelkammer oder Gasmaus mit konstanter Temperatur für das Sammelmedium vorzusehen und dort eine Gas- oder Flüssigkeitskopplung zur Probenentnahme vorzusehen, so dass nicht notwendigerweise die Sensoreinrichtung stets an derselben Vorrichtung verbleiben muss, sondern nur zu Prüfungszwecken mit der Vorrichtung in Verbindung gebracht wird. Die Sensoreinrichtung kann sich im vorstehend beschriebenen Fall auch an einem zentralen Ort befinden und es können Proben des Sammelmediums entnommen und der Sensoreinrichtung zugeführt werden.

Nach einer weiteren Ausführungsform ist das Gehäuse innerhalb eines Behältnisses aufgenommen, welches ein den Permeenten enthaltendes Prüfgas und/oder eine Prüfflüssigkeit enthält. Unter Verwendung einer derartigen Vorrichtung kann das Alterungsverhalten nach gasförmiger und/oder flüssiger Beanspruchung getrennt verfolgt werden. Es kann sich auch als vorteilhaft erweisen, dass das Gehäuse eine Druckregeleinrichtung zum Einstellen eines vorgebbaren Drucks (drucklos, Überdruck, Unterdruck) innerhalb des Behältnisses aufweist.

Während die vorstehend beschriebene Vorrichtung nach der ersten Variante der Erfindung zum Simulieren einerseits möglichst betriebsähnlicher Zustände andererseits aber auch extremer im Betrieb selten oder nicht auftretender Zustände ausgebildet ist, betrifft eine zweite Variante der Erfindung eine Vorrichtung, welche zur Durchführung des erfindungsgemäßen Verfahrens an einer, insbesondere im Betrieb befindlichen, Rohrverbindung geeignet ist. Diese erfindungsgemäße Vorrichtung umfasst ein eine Rohrverbindungsstelle von außen überfangendes und dabei eine an die Rohrdichtung angrenzende Messkammer bildendes Gehäusebauteil, welches gegen die Außenseite des einen und anderen Rohrendes abgedichtet ist, eine mit der Messkammer kommunizierende Sensoreinrichtung zum Bestimmen der Konzentration des Permeenten auf der Messkammerseite der Rohrdichtung.

Bei dieser Vorrichtung wird also die Messkammer durch das erwähnte die Rohrverbindung ringförmig umgebende Gehäusebauteil gebildet. Es wird auch hier darauf hingewiesen, daß die Sensoreinrichtung nicht notwendigerweise unmittelbar an der Messvorrichtung vorgesehen sein muss.

Es hat sich als vorteilhaft erwiesen, dass das Gehäusebauteil ein Abschnitt eines Hüllrohres ist, welches um die Rohrverbindungsstelle herum vorgesehen ist und zwischen sich und der Rohrverbindungsstelle eine ringraumförmige Messkammer definiert. Das Hüllrohr wird gegen die Außenflächen der Rohrabschnitte abgedichtet, wofür sich eine kombinierte Abdichtung aus PU-Schaum, PTFE-Dichtungsmaterial sowie Teflondichtungen als besonders vorteilhaft erwiesen haben.

Die erfindungsgemäße Vorrichtung nach der zweiten Variante der Erfindung kann an einer beliebigen Rohrverbindung vorgesehen werden, wobei es sich bei der Rohrverbindung um einen Teil einer im Betrieb befindlichen Anlage handeln kann. Es kann sich aber auch als vorteilhaft erweisen, dass die Rohrverbindungsstelle von zwei zur Prüfvorrichtung gehörenden Rohrabschnitten gebildet ist, die an ihren von der Rohrverbindungsstelle abgewandten Enden durch einen Deckel gegen die Umgebung abgedichtet sind. Sind mehrere derartiger Prüfvorrichtungen vorhanden, so können an ein- und derselben Dichtungskonfiguration verschiedene Betriebsbedingungen simuliert werden.

Wenn die Sensoreinrichtung an ein Gerät zur Messdatenübermittlung und -verarbeitung angeschlossen wird, so erweist sich dies im Hinblick auf die Dokumentation der Verfahrensergebnisse als vorteilhaft.

Weitere Merkmale, Einzelheiten und Vorteile der Erfindung ergeben sich aus den beigefügten Ansprüchen und der zeichnerischen Darstellung und nachfolgenden Beschreibung verschiedener Ausführungsformen der erfindungsgemäßen Vorrichtung und des damit durchführbaren erfindungsgemäßen Verfahrens. In der Zeichnung zeigt:
- Figur 1: ein Diagramm zur Verdeutlichung der verschiedenen Phasen der Alterung eines Dichtwerkstoffs;
- Figur 2: eine Ansicht einer erfindungsgemäßen ersten Ausführungsform einer Vorrichtung zur Durchführung des Verfahrens;
- Figur 3: eine schematische Darstellung der Anordnung der Vorrichtung nach Figur 1 in einem Gerinne eines Abwasserkanalrohrs;
- Figur 4: eine Schnittansicht einer zweiten Ausführungsform einer erfindungsgemäßen Vorrichtung mit zwei Rohrabschnitten; und
- Figur 5: eine dritte Ausführungsform der erfindungsgemäßen Vorrichtung an einer Rohrverbindungstelle einer Rohrleitungsstrecke.

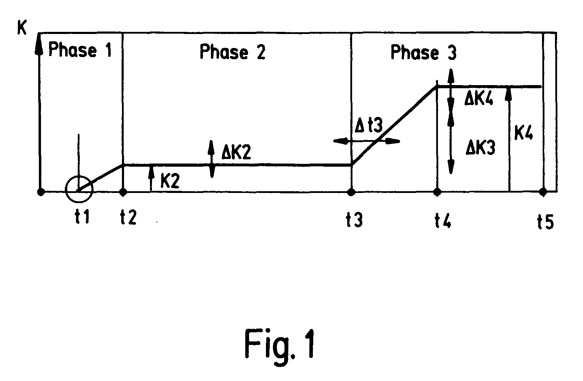

Figur 1 zeigt die verschiedenen Phasen des Alterungsverlaufs eines Dichtwerkstoffs bei der erfindungsgemäßen Verfahrensführung und verdeutlicht die verschiedenen Zeitpunkte und Zeitintervalle, die bei der erfindungsgemäßen Verfahrensführung von Bedeutung sind.

In der nachfolgenden Aufstellung sind die Symbole der Figur 1 aufgeführt und erläutert.
- t0: = Startzeitpunkt bzw. Befüllzeitpunkt
- t1: = Durchstoßzeitpunkt
- t2: = Beginn der Phase 2
- t3: = Beginn der Phase 3
- ▲t3: = Einfluß von zeitraffenden Maßnahmen (künstliche Alterung)
- t4: = Abschluß der Meßkammer-Konzentrationssteigerung
- t5: = Eintritt der Leckage
- K2: = mittlere Konzentration im stationären Zustand (konstanter Volumenstrom)
- K4: = max. Konzentration ohne Leckage
- ▲K2: = Schwankungen des K2-Wertes durch geringfügige Änderungen der Prüfbedingungen
- ▲K3: = Anstieg der Meßkammerkonzentration infolge Alterung
- ▲K4: = Schwankungen der max. Konzentration infolge temporären Durchlässigkeitsveränderungen

Der Beginn der Zeitachse bezeichnet den Startzeitpunkt bei der Durchführung des erfindungsgemäßen Verfahrens; es wird sich hierbei üblicherweise um denjenigen Zeitpunkt handeln, zu dem die Prüfseite des Dichtwerkstoffs erstmals mit dem Prüfmedium beaufschlagt wird. Es wird dann kontinuierlich oder in zeitlichen Abständen die Konzentration des Permeenten auf der von der Prüfseite des Dichtwerkstoffs abgewandten Messkammerseite gemessen. Die Konzentration wird in der ersten Phase ansteigen und sich in der zweiten Phase auf einen im wesentlichen konstanten Wert stabilisieren. Es besteht die Möglichkeit, den Durchstoßzeitpunkt durch Extrapolation der Messwerte zu bestimmen. Es handelt sich hierbei um denjenigen Zeitpunkt, zu dem mikroskopisch gesehen idealerweise das erste Teilchen oder Molekül des Permeenten den Dichtwerkstoff in Richtung auf die Messkammerseite durchdrungen hat. Der Zeitpunkt t2 markiert den Übergang von der ersten zur zweiten Phase, in der die Konzentration auf der Messkammerseite im wesentlichen konstant ist oder mit konstanter Rate leicht zunimmt. (Wenn Quellvorgänge stattfinden, kann es auch zu einer leichten Abnahme der Konzentration kommen). In dieser zweiten Phase ist die Permeabilität des Dichtwerkstoffs für den Permeenten konstant. Der Dichtwerkstoff befindet sich in seinem Neuwertigkeitszustand. Es besteht nicht die Gefahr, dass makroskopisch wahrnehmbare Leckagen auftreten. Diese zweite Phase kann sich, wenn Langzeitmessungen durchgeführt und betriebsähnliche Zustände simuliert werden, also nicht durch extreme Randbedingungen eine vorzeitige Alterung eines Dichtwerkstoffs herbeigeführt wird, über eine sehr lange Zeit, möglicherweise über Jahre hinweg erstrecken. Es ist jedoch auch möglich, einen Langzeitversuch nach einer vorgegebenen Zeitspanne abzubrechen. Es kann dann als Versuchsergebnis zum Beispiel die Aussage gemacht werden, daß ein bestimmter Dichtwerkstoff unter bestimmten vorgegebenen Bedingungen im Hinblick auf Umgebungsmedium, Spannung, Temperatur, etc. seinen Neuwertigkeitszustand auch nach einer Zeitdauer T nach Versuchsbeginn nicht verlassen hat.

Bei Verfahren, die über die zweite Phase des Dichtwerkstoffs hinaus durchgeführt werden, wird zu einem im Laufe der Zeit erreichten Zeitpunkt t3 die Konzentration des Permeenten auf der Messkammerseite stark ansteigen, was auf eine Zunahme der Permeabilität des Dichtwerkstoffs für den Permeenten schließen lässt. Dies wiederum deutet auf eine Veränderung des Dichtwerkstoffs hin; es kann sich um Versprödung handeln oder um das Auftreten von Mikrorissen, die Kompressionskräfte innerhalb des Dichtwerkstoffs können abnehmen bis hin zum Verlust der Flankenhaftung, oder es kann zu einem Materialabtrag gekommen sein. Erfahrungsgemäß wird die Permeabilität und damit die Konzentration des Permeenten auf der Messkammerseite mit fortschreitender Zeit immer stärker zunehmen. Diese dritte Phase der zunehmenden Permeabilität ist dadurch gekennzeichnet, daß der Dichtwerkstoff zwar noch brauchbar ist - es treten noch keine makroskopisch wahrnehmbaren Leckagen auf - die Dichtigkeitsreserven des Dichtwerkstoffs werden jedoch vermindert, indem das Dichtungsgefüge zunehmend gestört ist und kleinere Anrisse zeigt, die jedoch in Folge noch ausreichender Kompression innerhalb des Dichtwerkstoffs ausreichend druckdicht sind.

Mit zunehmender Alterung werden geometrische und optische Veränderungen des Dichtwerkstoffs erkennbar, es kommt zu größeren Werkstoffveränderungen, die zum Teil noch reversibel sind. Schließlich wird bei t4 der Brauchbarkeitsbereich verlassen. Der Dichtwerkstoff befindet sich zu diesem Zeitpunkt t4 im Grenzbereich; er ist im drucklosen Zustand gerade noch dicht gegenüber flüssigen Medien, kann aber nicht mehr als druckdicht bezeichnet werden. Das Dichtungsgefüge ist stark gestört, es gibt größere Anrisse, Abplatzungen und Auflösungen. Auftretende Verformungen sind nicht mehr reversibel. Schließlich tritt zum Zeitpunkt t5 Leckage auf.

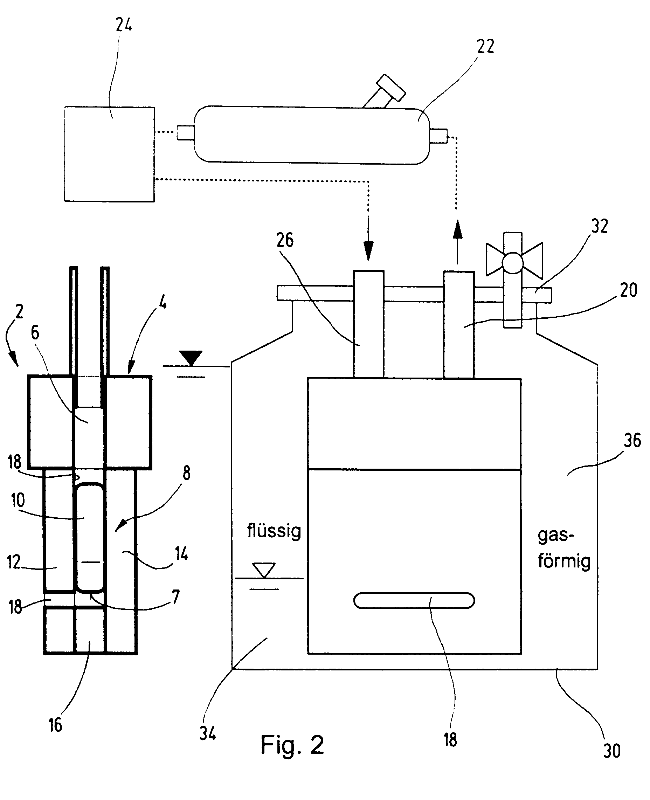

Figur 2 zeigt in schematischer Darstellung eine insgesamt mit dem Bezugszeichen 2 bezeichnete Vorrichtung zur Durchführung des Verfahrens zur Alterungsverfolgung. Die Vorrichtung 2 umfasst ein Gehäuse 4, welches eine Messkammer 6 bildet. Ferner ist eine Einspanneinrichtung 8 vorgesehen, in der ein Materialprobenabschnitt 10 mit einer vorzugsweise vorgebbaren Kompression derart eingespannt werden kann, dass er auf einer Seite die Messkammer 6 begrenzt und auf der gegenüberliegenden Seite 7 mit einem Prüfmedium beaufschlagbar ist. Die Einspannvorrichtung 8 umfasst in dem dargestellten Fall zwei plattenförmige Presskörper 12, 14 und eine U-förmige Distanzplatte 16, die sandwichartig zwischen die plattenförmigen Presskörper 12 und 14 gelegt ist. Hierdurch wird ein Raum 18 im Bereich zwischen den Schenkeln der U-förmigen Distanzplatte 16 gebildet, in der der zu untersuchende Materialprobenabschnitt 10 angeordnet und durch die gegen die Distanzplatte 16 bzw. den Materialprobenabschnitt 10 gedrückten Presskörper 12, 14 komprimiert wird. Es können beispielsweise Distanzplatten 16 unterschiedlicher Dicke verwendet werden, wodurch ein abzudichtender Spalt variabler Abmessung simuliert werden kann. Auf der der Messkammer 6 gegenüberliegenden Seite 7 des Materialprobenabschnitts 10 ist in dem einen Druckkörper 12 eine schlitzförmige Öffnung 18 ausgebildet, durch welche der Materialprobenabschnitt 10 mit einem Prüfmedium beaufschlagbar ist. Die Messkammer 6 ist gegenüber der spaltförmigen Öffnung 18 abgedichtet, so daß ein in dem Prüfmedium enthaltener Permeent nur im Wege der Diffusion durch den Materialprobenabschnitt 10 hindurch zur Messkammer 6 gelangen kann.

Von der Messkammer 6 führt eine Abführleitung 20 weg, die in einen Sammelbehälter 22 mündet, in dem eine nicht dargestellte Temperaturregeleinrichtung vorgesehen ist. Der Sammelbehälter 22 steht in Strömungsverbindung mit einer Sensoreinrichtung 24, die ihrerseits über eine Leitung 26 wieder mit der Messkammer 4 verbunden ist. Hierdurch ist ein Strömungspfad zum Umwälzen eines gasförmigen oder flüssigen Sammel- oder Aufnahmemediums für den Permeenten gebildet.

Die Vorrichtung 2 ist in einem druckdichten Glasbehälter 30 angeordnet, wobei die Leitungen 20 und 26 durch einen Deckel 32 des Behälters 30 hindurchgeführt sind. Der Behälter 30 kann zur Temperatursteuerung in ein Wärmebad eingestellt werden. Wie in Figur 2 angedeutet, ist in den Behälter 30 eine Prüfflüssigkeit 34 eingebracht, die über die schlitzförmige Öffnung 18 die Prüfseite 7 des Materialprobenabschnitts 10 beaufschlagt. Oberhalb der Flüssigkeit ist ein Prüfgas 36 vorgesehen. Die Vorrichtung 2 kann auch so weit nach oben bewegt werden, dass die schlitzförmige Öffnung 18 oberhalb des Flüssigkeitsspiegels zu liegen kommt.

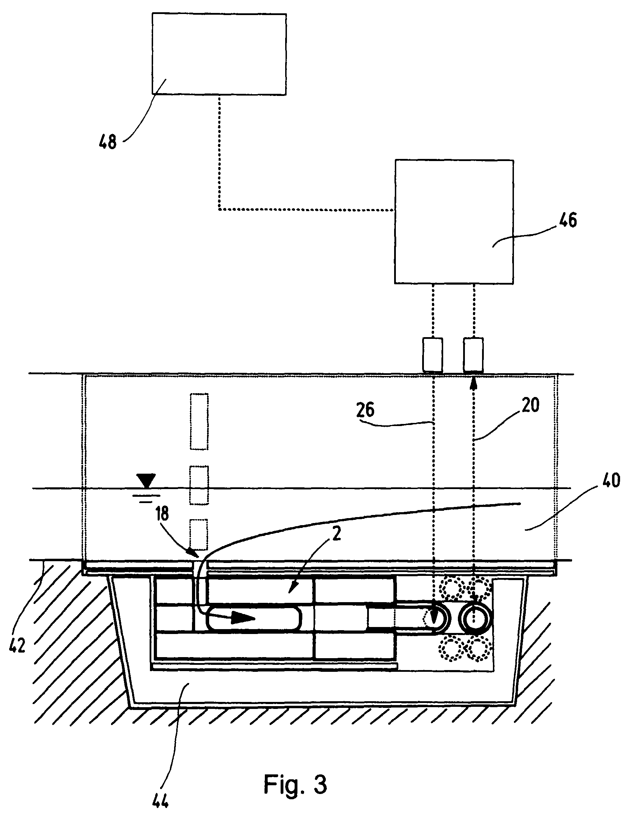

Figur 3 zeigt schematisch die Anordnung einer Vorrichtung nach Figur 1 in einem Gerinne 40 eines Abwasserkanalrohres 42. Die Vorrichtung 2 ist in einem Formstück 44 aufgenommen und in eine Vertiefung des Gerinnes 40 eingesetzt. Die schlitzförmige Öffnung 18 zeigt dabei nach oben und wird mit in dem Gerinne 40 strömendem Abwasser beaufschlagt. Wie in der Figur 3 angedeutet, sind die von der Messkammer 6 wegführenden bzw. in diese mündenden Leitungen 20, 26 aus dem Abwasserkanal 42 herausgeführt und mit einer Sensoreinrichtung 46 verbunden, die ihrerseits mit einem Gerät 48 zur Messdatenerfassung und -verarbeitung verbunden ist.

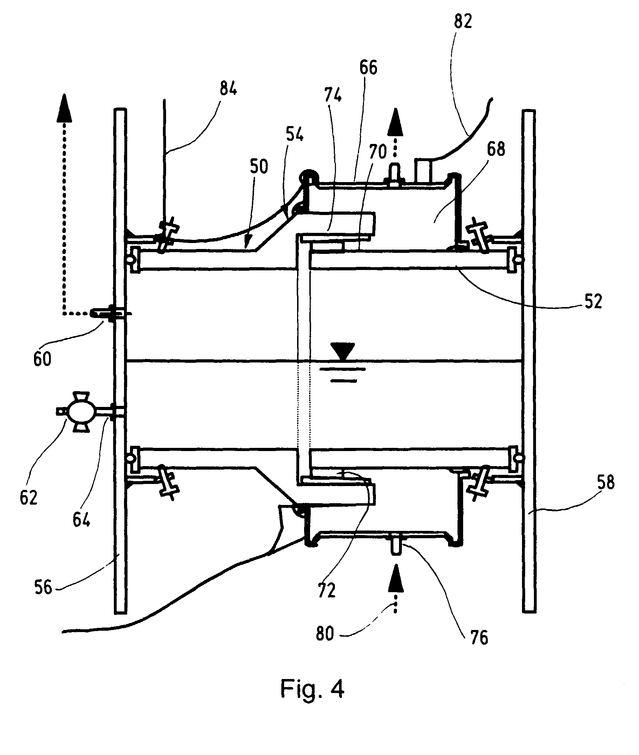

Figur 4 zeigt eine weitere Ausführungsform einer erfindungsgemäßen Vorrichtung, welche zwei Rohrabschnitte 50 und 52 umfasst, die eine Rohrverbindung 54 bildend ineinandergesteckt sind. An ihren von der Rohrverbindung 54 gegenüberliegenden Enden sind die Rohrabschnitte 50 und 52 von einem deckelartigen Bauteil 56 bzw. 58, welches zugleich eine Halterung für die Rohrabschnitte 50 und 52 bildet, druckdicht geschlossen. In dem Bauteil 56 sind eine Gaskupplung 60 sowie eine mit einem Absperrhahn 62 versehene Durchführung 64 vorgesehen.

Um die Rohrverbindung 54 herum ist mit Hilfe eines hülsenförmigen Bauteils 66 eine Messkammer 68 gebildet, welche über eine Trennfuge 70 zwischen den Abschnitten 50 und 52 mit einer Rohrdichtung 72 in Verbindung steht. Die Rohrdichtung 72 ist zwischen einer flanschartigen Erweiterung 74 des einen Rohrabschnitts 50 und dem Außenumfang des anderen Rohrabschnitts 52 eingeklemmt. Von der Messkammer 68 führt über eine Gasmesskupplung 76 eine Gasmessleitung 80 zu einer in der Figur nicht dargestellten Gasmesseinrichtung weg.

Das Rohrinnere der Vorrichtung ist über die Kupplung 60 und die Durchführung 64 zugänglich. Wenn Messungen durchgeführt werden sollen, wird ein flüssiges und/oder gasförmiges den Permeenten enthaltendes Prüfmedium in das Innere der Rohrabschnitte 50 und 52 eingeleitet. Aufgrund einer von Null verschiedenen Permeabilität der Rohrdichtung 74 für den Permeenten diffundiert dieser durch die Rohrdichtung 72 hindurch in die Messkammer 68 und kann in einem gasförmigen oder flüssigen Sammelmedium auf der Messkammerseite nachgewiesen werden. Mit dem Bezugszeichen 82 ist ein Temperaturfühler und mit dem Bezugszeichen 84 ein Erdkabel bezeichnet.

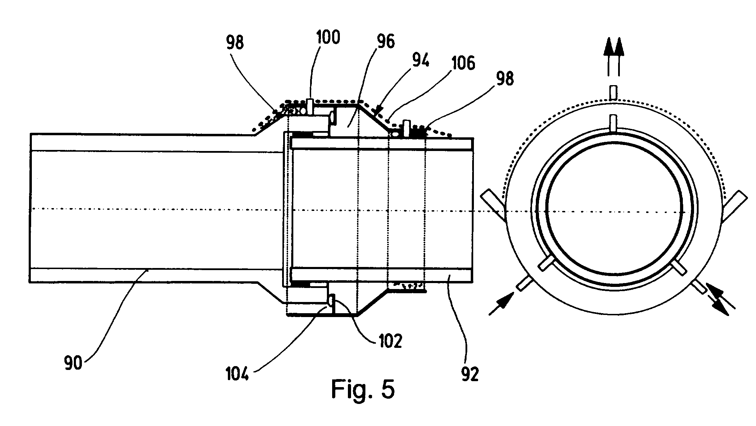

Schließlich zeigt Figur 5 eine Vorrichtung zur Durchführung des erfindungsgemäßen Verfahrens im Längs- und Querschnitt, die unmittelbar an einer Rohrverbindungsstelle zweier Rohrabschnitte 90, 92 einer in Betrieb befindlichen Rohrleitungsstrecke angeordnet ist. Ein Hüllrohr 94 umgibt die Trennfuge der beiden Rohrabschnitte 90, 92 kreisringförmig und bildet dabei eine Messkammer 96. Das Hüllrohr 94 ist an beiden Enden mittels PU-Schaum 98 gegen die Außenseiten der Rohrabschnitte 90 und 92 abgedichtet. Es sind desweiteren Justierschrauben und Injektionsnippel 100 vorgesehen, durch welche zur Durchführung einer nachträglichen Sanierung ein Epoxidharz oder dergleichen injiziert werden kann. Das Hüllrohr 94 weist noch radial nach innen weisende Flanschabschnitte 102 auf, mit denen es unter Zwischenordnung einer umlaufenden Teflonschnurdichtung 104 gegen die Stirnseite eines erweiterten flanschartigen Endabschnitts des Rohrabschnitts 90 dichtend anliegt. Schließlich ist als Außenhaut ein Schrumpfschlauch 106 mit innerer Heißklebeschicht vorgesehen.

Die Funktionsweise der Vorrichtung entspricht derjenigen der Vorrichtung nach Figur 4 und braucht daher nicht näher beschrieben zu werden. Die Vorrichtungen unterscheiden sich dadurch, dass es sich bei der Vorrichtung gemäß Figur 4 um eine auch die Rohrabschnitte umfassende Prüfvorrichtung handelt, während gemäß Figur 5 Messungen an einer Rohrverbindung vorgenommen werden, welche zu einer im Betrieb befindlichen Anlage gehört.

## Patentansprüche

1. Verfahren zur Alterungsverfolgung von Dichtwerkstoffen, insbesondere zur Abdichtung von Rohrverbindungen im Abwasserkanalbereich oder von Bauwerksfugen, **dadurch gekennzeichnet**, dass die Konzentration eines bestimmten von einer Seite (7) des Dichtwerkstoffs (10, 72) durch diesen hindurch zu einer Messkammer (6, 68, 96) auf der anderen Seite diffundierten Permeenten kontinuierlich oder in zeitlichen Abständen auf der Messkammerseite ermittelt und dabei ein Zeitintervall (Phase 2) konstanter Permeabilität des Dichtwerkstoffs für den Permeenten festgestellt wird.

2. Verfahren nach Anspruch 1, dadurch gekennzeichnet, dass dabei ein Zeitpunkt (t3) nach Verfahrensbeginn ermittelt wird, ab dem sich die Konzentration in der Messkammer (6, 68, 96) zu erhöhen beginnt oder die Konzentration stärker ansteigt als im Verlauf des Zeitintervalls (Phase 2) zuvor, was einen Anstieg der Permeabilität des Dichtwerkstoffs (10, 72) für den bestimmten Permeenten bedeutet, ohne daß zu diesem Zeitpunkt der Brauchbarkeitsbereich des Dichtwerkstoffs verlassen wäre.

3. Verfahren nach Anspruch 1 oder 2, dadurch gekennzeichnet, dass ein Zeitpunkt (t2) nach Verfahrensbeginn ermittelt wird, der den Anfang eines Zeitintervalls (Phase 2) bezeichnet.

4. Verfahren nach einem der vorstehenden Ansprüche, dadurch gekennzeichnet, dass der Dichtwerkstoff in Form eines Materialprobenabschnitts (10) einer bestimmten geometrischen Abmessung, unter einer bestimmten Spannung, und unter Einwirkung eines bestimmten Umgebungsmediums untersucht wird.

5. Verfahren nach Anspruch 4, dadurch gekennzeichnet, dass die bestimmte geometrische Abmessung des Materialprobenabschnitts (10) im wesentlichen identisch ist mit derjenigen eines Dichtelements, dessen Alterungsverhalten von Interesse ist.

6. Verfahren nach Anspruch 4 oder 5, dadurch gekennzeichnet, dass die bestimmte Spannung oder Kompression, unter der der Materialprobenabschnitt (10) während der Durchführung des Verfahrens steht, im wesentlichen identisch ist mit derjenigen, der ein Dichtelement beim bestimmungsgemäßen Einsatz ausgesetzt ist.

7. Verfahren nach Anspruch 4, 5 oder 6, dadurch gekennzeichnet, dass das bestimmte Umgebungsmedium (10) dasjenige ist, welches bei der bestimmungsgemäßen Verwendung eines Dichtelements, dessen Alterungsverhalten verfolgt werden soll, an dieses angrenzt.

8. Verfahren nach einem der vorstehenden Ansprüche, dadurch gekennzeichnet, dass das bestimmte Umgebungsmedium wechselweise durch gasförmige bzw. flüssige Beaufschlagung des Materialprobenabschnitts (10) bereitgestellt wird.

9. Verfahren nach einem der vorstehenden Ansprüche, dadurch gekennzeichnet, dass der Materialprobenabschnitt (10, 72) gleichzeitig an einer Stelle mit einem Prüfgas und an einer anderen Stelle mit einer Prüfflüssigkeit beaufschlagt wird.

10. Verfahren nach einem der vorstehenden Ansprüche, dadurch gekennzeichnet, dass bei der Durchführung des Verfahrens betriebsähnliche Zustände simuliert werden.

11. Verfahren nach einem der vorstehenden Ansprüche, dadurch gekennzeichnet, dass das Verfahren an einem bestimmungsgemäß zwischen abzudichtenden Bauteilen (50, 52; 90, 92) vorgesehenen Dichtelement (72) durchgeführt wird.

12. Verfahren nach Anspruch 11, dadurch gekennzeichnet, dass das Verfahren an einer Rohrverbindung (54) durchgeführt wird und in verschiedenen Meßreihen der Rohrfüllungsgrad an der Rohrdichtungsstelle variiert wird.

13. Verfahren nach Anspruch 11, dadurch gekennzeichnet, dass in einer Meßreihe der Rohrfüllungsgrad variiert wird, um die Schwellbeanspruchung der Dichtung zu untersuchen.

14. Verfahren nach Anspruch 11, dadurch gekennzeichnet, dass das Verfahren an einem bestimmungsgemäß zwischen abzudichtenden Bauteilen vorgesehenen Dichtelement durchgeführt wird, wobei die Bauteile (90, 92) Bestandteil einer in Betrieb befindlichen Anlage sind.

15. Verfahren nach Anspruch 11, dadurch gekennzeichnet, dass vor Beginn des Verfahrens ein Drucktest unter Anwendung eines Prüfdrucks bis 500 mbar durchgeführt wird.

16. Verfahren nach Anspruch 11, dadurch gekennzeichnet, dass nach Erreichen des Zeitpunkts (t3) beginnender oder stärker werdender Konzentrationserhöhung in der Meßkammer ein Drucktest durchgeführt werden.

17. Verfahren nach Anspruch 11, dadurch gekennzeichnet, dass während des Zeitintervalls (Phase 2) und/oder nach dem Zeitpunkt (t3) Meßkammer-Spülungen durchgeführt werden, um die Permeationsgeschwindigkeit des Permeenten durch den Materialprobenabschnitt hindurch zu bestimmen.

18. Vorrichtung zur Durchführung des Verfahrens nach einem oder mehreren der vorstehenden Ansprüche umfassend
- ein eine Messkammer (6) bildendes Gehäuse (4),
- eine Einspanneinrichtung (12, 14, 16), mittels derer ein Materialprobenabschnitt (10) eines Dichtwerkstoffs so innerhalb des Gehäuses (4) angeordnet werden kann, daß er auf einer Seite die Messkammer (6) begrenzt und auf der anderen Seite (7) mit einem den Permeenten enthaltenden Prüfmedium beaufschlagbar ist, und
- einen Sensor (24) zum Messen der Konzentration des durch den Materialprobenabschnitt (10) diffundierten Permeenten in der Meßkammer.

19. Vorrichtung nach Anspruch 18, gekennzeichnet durch eine in die Messkammer (6) mündende Zuführleitung (26) und eine von der Messkammer (6) wegführende Abführleitung (20), um ein den Permeenten enthaltendes strömbares Sammelmedium an einer Sensoreinrichtung (24) vorbei- und wieder der Messkammer (6) zuzuführen.

20. Vorrichtung nach Anspruch 18 oder 19, gekennzeichnet durch eine Temperaturregeleinrichtung zum Einstellen einer vorgebbaren Temperatur innerhalb des Vorrichtungsgehäuses und/oder innerhalb des Sammelmediums.

21. Vorrichtung nach einem der Ansprüche 18 bis 20, dadurch gekennzeichnet, dass die Einspanneinrichtung (12, 14, 16) den Dichtungsmaterialabschnitt (10) beim Einspannen in vorgebbarer Weise deformieren kann.

22. Vorrichtung nach einem der Ansprüche 18 bis 21, dadurch gekennzeichnet, dass das Gehäuse innerhalb eines Behältnisses (30) aufgenommen ist, welches ein den Permeenten enthaltendes Prüfgas (36) und/oder eine Prüfflüssigkeit (34) enthält.

23. Vorrichtung nach Anspruch 22, gekennzeichnet durch eine Druckregeleinrichtung zum Einstellen eines vorgebbaren Drucks innerhalb des Behältnisses (30).

24. Vorrichtung nach einem der Ansprüche 18 bis 23, dadurch gekennzeichnet, dass der Materialprobenabschnitt (10) wenigstens teilweise einsehbar in dem Gehäuse (4) vorgesehen ist.

25. Vorrichtung zur Durchführung des Verfahrens nach einem oder mehreren der vorstehenden Ansprüche umfassend
- ein eine Rohrverbindungsstelle (54) von außen überfangendes und dabei eine an die Rohrdichtung angrenzende Messkammer (68, 96) bildendes Gehäusebauteil (66, 94), welches gegen die Außenseite des einen und anderen Rohrendes (50, 52; 90, 92) abgedichtet ist,
- eine mit der Messkammer (68, 96) kommunizierende Sensoreinrichtung zum Bestimmen der Konzentration des Permeenten auf der Meßkammerseite der Rohrdichtung.

26. Vorrichtung nach Anspruch 25, dadurch gekennzeichnet, dass das Gehäusebauteil ein Abschnitt eines Hüllrohres ist, welches um die Rohrverbindungsstelle (54) herum vorgesehen ist und zwischen sich und der Rohrverbindungsstelle eine ringraumförmige Messkammer (68, 96) definiert.

27. Vorrichtung nach Anspruch 25 oder 26, dadurch gekennzeichnet, dass das Hüllrohr mittels einer umlaufenden Teflondichtung gegen die Rohrenden abgedichtet ist.

28. Vorrichtung nach Anspruch 25, 26 oder 27, dadurch gekennzeichnet, dass das Hüllrohr mittels PU-Schaum gegen die Rohrenden abgedichtet ist.

29. Vorrichtung nach einem der Ansprüche 25 bis 28, dadurch gekennzeichnet, dass das Hüllrohr mittels einer umlaufenden PTFE-Dichtung gegen die Rohrenden angedichtet ist.

30. Vorrichtung nach einem der Ansprüche 25 bis 29, dadurch gekennzeichnet, dass das Gehäusebauteil mittels mehrkomponentiger hintereinanderangeordneter prüfmedienresistenter Dichtungsmaterialien abgedichtet ist.

31. Vorrichtung nach einem der Ansprüche 25 bis 30, dadurch gekennzeichnet, dass die Rohrverbindungsstelle (54) von zwei zur Prüfvorrichtung gehörenden Rohrabschnitten (50, 52) gebildet ist, die an ihren von der Rohrverbindungsstelle (54) abgewandten Enden durch Deckel (56, 58) gegen die Umgebung abgedichtet sind.

32. Vorrichtung nach Anspruch 31, dadurch gekennzeichnet, dass in einem der Deckel (56) eine Zuführeinrichtung (60, 64) für ein den Permeenten enthaltendes Prüfmedium vorgesehen ist.

33. Vorrichtung nach einem der Ansprüche 18 bis 32, dadurch gekennzeichnet, dass die Sensoreinrichtung an ein Gerät zur Messdatenübermittlung und -verarbeitung anschließbar ist.
